Europäisches Patentamt

European Patent Office

Office européen des brevets

(19)

(11) Publication number: **0 200 382**
**B1**

# EUROPEAN PATENT SPECIFICATION

(45) Date of publication of the patent specification:
14.11.90

(51) Int. Cl.⁵: **B29C 73/16**

(21) Application number: **86302536.7**

(22) Date of filing: **07.04.86**

(54) Sealant composition for pneumatic tyres.

(30) Priority: **19.04.85 GB 8510117**

(43) Date of publication of application:
**10.12.86 Bulletin 86/45**

(45) Publication of the grant of the patent:
**14.11.90 Bulletin 90/46**

(84) Designated Contracting States:
**DE FR GB**

(56) References cited:
**FR-A- 2 340 832**
**FR-A- 2 399 923**
**FR-A- 2 399 924**
**GB-A- 1 570 398**
**GB-A- 2 082 191**

(73) Proprietor: **DUNLOP LIMITED, Silvertown House Vincent Square, London SW1P 2PL(GB)**

(72) Inventor: **Thompson, William Charles, 57 Beeches Drive, Erdington Birmingham B24 0DT(GB)**
Inventor: **Robinson, Graham, 4 Federick Road, Sutton Coldfield West Midlands B73 5GQ(GB)**
Inventor: **Clarke, David Henry, 287 Lichfield Road, Rushall Walsall West Midlands(GB)**

(74) Representative: **Sparrow, Alvar Alfred et al, BTR Group Patent & Trade Mark Service P.O. Box 504, Erdington Birmingham B24 9QH(GB)**

## Description

This invention relates to tyre puncture sealant compositions.

In U K Patent Specification No. 1 570 398 of Dunlop Limited there is described a composition for application to the interior surface of the tread portion of a pneumatic tyre to facilitate relative movement between contacting portions of the interior surface of the tyre when the tyre is driven deflated, said composition comprising a polybutene, and acrylic polymer or a polyolefin as gelling agent for the polybutene, and a particulate solid puncure sealing material having fine particle sizes in a specified range and being present in an amount of at least 8% and no more than 66% of the total volume of the composition.

In U K Patent Specification No. 1 570 397 of Dunlop Limited there is described a pneumatic tyre having disposed on at least the interior surface of the tyre tread portion a coating comprising a non-volatile composition produced by gelling the composition described in U K Patent Specification No. 1 570 398.

According to both of these specifications, the presence of a particulate solid puncure sealing material is essential to achieve adequate puncture sealing properties, and the polyolefin gelling agent is typified by polyethylene.

In French Patent Publication No. 2 399 923 there is described a puncture sealant composition for application to the interior surface of a pneumatic tyre, said composition being based on polybutene and a surfactant, typically also containing solid filler particles and optionally containing a polyolefin. The composition necessitates the inclusion of a surfactant, advocates the inclusion of particulate solid material such as rubber crumb or wood flour and does not anticipate the inclusion of butyl rubber.

In French Patent Publication No. 2 399 924 there is described a puncture sealant composition for application to the interior surface of a pneumatic tyre, said composition being based on polybutene and an amide wax, preferably also containing solid puncture sealing material and optionally containing a polyolefin and/or an elastomer. The composition necessitates the inclusion of an amide wax, advocates the inclusion of solid puncture sealant material such as rubber crumb or wood flour and does not anticipate the specific presence of both polyopropylene and butyl rubber.

We have now developed a composition for application to the interior surface of a pneumatic tyre, which composition provides satisfactory sealing of punctures without the presence of a particulate solid puncture sealing material.

According to the present invention there is provided a composition for application to the interior surface of a pneumatic tyre to seal punctures in the tyre while the tyre is running in a deflated condition, said composition comprising polybutene, polypropylene and butyl rubber, wherein the amount of polybutene is preponderant in relation to the amounts of the other composition ingredients and wherein particulate solid puncture sealing material is substantially absent from the composition.

According to the present invention also there is provided a pneumatic tyre having on at least the interior surface of its tread portion a gel film of a composition defined in the immediately preceding paragraph.

By the term "puncture" there is meant any aperture in the tyre which results in undesirable air-leakage from within the tyre, such as one caused by puncturing, tyre failure or inflation-valve failure.

Suitable the composition may consist substantially only of the polybutene, polypropylene and butyl rubber but, if desired, one or more additional ingredients such as stabilising agents (e.g. antioxidants) may be present. However, particulate solid puncture sealing material, e.g. rubber crumb and/or wood flour, is substantially absent from the essential composition.

The polybutene preferably is basically a polyisobutene which may contain a proportion of butene-1 units, e.g. up to about 10% by weight. Preferably the polybutene has a low molecular weight, such as those having viscosity average molecular weights in the range of about 900 to 1300 and viscosities in the range of about 800 to 3500 Saybolt Universal Seconds measured according to BS 188–1957 at 98.9°C.

The polypropylene should be non-fluid at normally-inflated tyre running temperatures but should become fluid at temperatures created by deflated tyre running. In its solid state it should have good flexibility without cracking. Suitably it may have a melt flow index in the range 4 to 20 at 230°C under a 2.16 kg load, and a softening point in the range 120° to 150°C.

The butyl rubber preferably has a high viscosity average molecular weight, such as at least 400,000 and preferably in the range of 500,000 to 600,000. Its viscosity when heated to about 180°C preferably should be sufficiently low to enable the composition to be applied easily by spraying through a nozzle to produce a film of even thickness.

All three of the essential ingredients should be in a substantially non-crosslinked, thermoplastic state.

The proportion of polybutene should be preponderant in relation to the other ingredients. Generally, the amount of polybutene present in the composition is from 65 to 98 per cent by weight, preferably from 85 to 90 per cent by weight, the amount of plypropylene present in the composition is from 3 to 20 per cent by weight, preferably from 3 to 10 per cent by weight, and the amount of butyl rubber is from 3 to 20 per cent by weight, preferably from 3 to 10 per cent by weight.

The composition normally is a gel which does not flow noticeably under gravity or under the force/temperature conditions present in a tyre when running in a normally-inflated state. Under the conditions of running of a tyre which has become deflated (partially or totally) owing to a puncture, the viscosity of the applied composition decreases such that the composition flows into and seals the puncture, the seal becoming more secure as the temperature of the tyre decreases. Generally the viscosity of the composition under conditions of deflated running of a tyre would be in the range 1000 to 3000 Saybolt Universal Seconds measured according to BS 188-1957 at 98.9°C. It is found that the low viscosity of the composition at high temperatures, e.g. at about 150°C, is owing considerably to the presence of the polypropylene.

In the production of the composition, preferably the butyl rubber is added in the form of a pre-blend with at least some of the polypropylene. Typically a pre-blend of the butyl rubber with at least some of the polypropylene is added to molten polybutene or, when not all of the polypropylene is required for the butyl rubber pre-blend, to a molten blend of the polybutene and polypropylene, whilst mixing to achieve a homogeneous composition, for example using a high-shear stirrer.

The composition is particularly suitable for use in radial tyres. The composition may be applied to the interior surface of at least the tread portion of a tyre by means which will produce a film of uniform thickness, typically 2 to 3 mm thick. A preferred method of application is by spraying molten composition from a static spray head onto the interior surface of a rotating tyre, although other methods of application may be employed if desired. The temperature of the composition as it is applied to the tyre surface normally should be above the melting point of the composition but preferably should not be so high as to result in thermal breakdown of the ingredients or significant flow of the applied composition.

It is found that compositions of the present invention have better adhesion to the tyre surface compared to compositions based on polybutene, polyethylene, butyl rubber and particulate solid puncture-sealants, and yet have adequate puncture-sealing characteristics.

The invention is illustrated in the following Example.

## E X A M P L E

|  | Per cent by weight |
|---|---|
| Polybutene ("Hyvis 30") | 90.4 |
| Polypropylene ("Propathene GYM 45") | 5.8 |
| Butyl rubber ("Butyl 111") | 3.8 |

"Hyvis 30" is a commercially available (ex. B P Chemicals Ltd.) polyisobutene containing up to about 10% by weight of butene-1 units and having a viscosity in the range 2900-3200 SUS measured according to BS 188-1957 at 98.9°C. "Propathene GYM 45" is a commercially available (ex. I.C.I. Ltd.) polypropylene having a melt flow index of 15 at 230°C under a 2.16 kg load, a softening point of 148°C, a flexural modulus according to Test Method ISO 178 of 17500 km.cm$^{-2}$, and a density of 0.905 g.cm$^{-3}$ "Butyl 111" is a commercially available butyl rubber (ex. Polysar Ltd.) having a viscosity average molecular weight of about 550,000 and an unsaturation level of 0.7 mol %.

The composition was prepared as follows:-

The polybutene was maintained in a molten state by heating at about 160°C and 2 parts by weight of the polypropylene were added under the action of a Silverson high-shear stirrer. The mixing was continued for about 5 minutes to achieve a homogeneous blend. The temperature of the blend was then increased to about 180°C and the butyl rubber was added with the remaining polypropylene under the action of the high-speed stirrer. The mixing was continued for about 1 to 3 hours to achieve homogeneity. The resulting composition may then be allowed to cool to a gelled state.

The composition was tested in pneumatic tyres for stability and puncture-sealing properties as follows:

500 g of the composition, at 170°C, were applied at a consistent rate to the interior surface of the tread portion of 220/65 VR 390 D7 "Denloc" (Registered Trade Mark) tyres by dispensing from a manually operated piston-actuated cylindrical container having a nozzle angled through 90°. The film thickness was about 3 mm at the centre of the tread portion, decreasing towards the edges of the tread portion and being about 1.9 mm at 4.5 cm from the centre.

Stability

A treated tyre was fitted to a "Denloc" (Registered Trade Mark) wheel and inflated to 2.2 Bar. The tyre/wheel assembly was subjected to a simulated test run at 190 km/h for 20 minutes and then at 200 km/h for a further 20 minutes, during which the composition reached an average temperature of 99°C.

It was found that the film width and appearance of the composition had not changed in any way.

Puncture Sealing Tests

Test 1

A treated tyre was fitted to a "Denloc" (Registered Trade Mark) wheel and inflated to 2.2 Bar.

Two sets of three 3.8 mm diameter standard steel nails were hammered perpendicularly into the tread to penetrate completely through the tread leaving the heads exposed, one set being positioned diametrically opposite to the other set, each being in a line parallel to the axis of the assembly and the three nails of each set being located such that one nail was at the tread centre, one nail was in a tread groove at about 2.5 cm from the centre and one nail was in a tread rib at about 2.5 cm from the centre on the opposite side to the nail in the groove.

The punctured areas were liberally coated with soap solution and checked for leakages. No air leakage was observed. The three nails of one of the sets were then removed. Again no air leakage was observed.

The tyre/wheel assembly with the three nails of one of the sets removed was fitted to a Jaguar XJ12 car which was then driven for about 8 km at about 80 km/h. No air leakage was observed during or after the drive test. The three nails of the other set were then also removed and the drive test was repeated. Again air leakage was observed during or after the drive test.

Test 2

A treated tyre was fitted to a "Denloc" (Registered Trade Mark) wheel and inflated to 2.2 Bar.

Four sets $\underline{A}$, $\underline{B}$, $\underline{C}$ and $\underline{D}$ of three standard steel nails were hammered perpendicularly into the tread to penetrate completely through the tread leaving the heads exposed, the sets being positioned equidistantly around the tyre and the nails of each set being located as in Test 1. The nails of the diametrically opposed sets $\underline{A}$ and $\underline{C}$ were of 2.7 mm diameter and the nails of the diametrically opposed sets $\underline{B}$ and $\underline{D}$ were of 3.8 mm diameter.

The tyre/wheel assembly was fitted to a Jaguar XJ12 car which was then driven for about 45 km at about 113 km/h. The drive test was repeated after one of the sets of 2.7 mm diameter nails had been removed and further repeated after one of the sets of 3.8 mm diameter nails had also been removed. In each case, no air leakage was observed during or after the test.

Test 3

The procedure of Test 2 was repeated except that the tyre/wheel assembly was driven for about 8 km at about 80 km/h in each case. In each case, no air leakage was observed during or after the test.

"Hyvis" and "Propathene" are trade marks which are believed to be registered in the United Kingdom and possibly also in other countries.

## Claims

1. A composition for application to the interior surface of a pneumatic tyre to seal punctures in the tyre while the tyre is running in a deflated condition, comprising essentially polybutene, polypropylene and butyl rubber, wherein the polybutylene is present in a major amount in relation to the sum of the amounts of the other composition ingredients.

2. A composition according to Claim 1 wherein the polybutene is a polyisobutene which may contain a proportion of butene-1 units.

3. A composition according to Claim 1 or 2 wherein the polypropylene has a melt flow index in the range 4 to 20 at 230°C under a 2.16 kg load, and a softening point in the range 120°C to 150°C.

4. A composition according to any of the preceding Claims wherein the polybutene is present in an amount of from 65 to 98 per cent by weight, the polypropylene is present in an amount of from 3 to 20 per cent by weight and the butyl rubber is present in an amount of from 3 to 20 per cent by weight.

5. A composition according to any of the preceding Claims wherein the polybutene is present in an amount of from 85 to 90 per cent by weight.

6. A composition according to any of the preceding Claims wherein the polypropylene is present in an amount of from 3 to 10 per cent by weight.

7. A composition according to any of the preceding Claims wherein the butyl rubber is present in an amount of from 3 to 10 per cent by weight.

8. A composition according to any of the preceding Claims having a viscosity under the conditions of deflated running of a tyre which is in the range 1000 to 3000 Saybolt Universal Seconds measured according to BS 188–1957 at 98.9°C.

9. A composition according to any of the preceding Claims wherein the polybutene has a viscosity average molecular weight in the range 900 to 1300.

10. A composition according to any of the preceding Claims wherein the butyl rubber has a viscosity average molecular weight in the range 500,000 to 600,000.

11. A pneumatic tyre having on the interior surface of at least its tread portion a gel film of a composition according to any of the preceding Claims.

12. A pneumatic tyre according to Claim 11 wherein the gel film thickness is in the range 2 to 3 mm.

## Patentansprüche

1.) Zusammensetzung zum Aufbringen auf die innere Oberfläche eines pneumatischen Reifens, um Löcher im Reifen abzudichten, während der Reifen bei abgelassener Luft läuft, enthaltend im wesentlichen Polybuten, Polypropylen und Butylkautschuk, wobei das Polybuten in überwiegender Menge in Bezug auf die Summe der Mengen der anderen Bestandteile der Zusammensetzung vorliegt.

2.) Zusammensetzung gemäß Anspruch 1, worin das Polybuten ein Polyisobuten ist, das einen Anteil an Buten-1-Einheiten enthalten kann.

3.) Zusammensetzung gemäß Anspruch 1 oder 2, worin das Polypropylen einen Schmelzindex im Bereich von 4 bis 20 bei 230°C unter einer Beladung von 2,16 kg und einen Erweichungspunkt im Bereich von 120 bis 150°C aufweist.

4.) Zusammensetzung gemäß einem der vorhergehenden Ansprüche, worin das Polybuten in einer Menge von 65 bis 98 Gew.-% vorliegt, das Polypropylen in einer Menge von 3 bis 20 Gew.-% vorliegt, und der Butylkautschuk in einer Menge von 3 bis 20 Gew.-% vorliegt.

5.) Zusammensetzung gemäß einem der vorhergehenden Ansprüche, worin das Polybuten in einer Menge von 85 bis 90 Gew.-% vorliegt.

6.) Zusammensetzung gemäß einem der vorhergehenden Ansprüche, worin das Polypropylen in einer Menge von 3 bis 10 Gew.-% vorliegt.

7.) Zusammensetzung gemäß einem der vorhergehenden Ansprüche, worin der Butylkautschuk in einer Menge von 3 bis 10 Gew.-% vorliegt.

8.) Zusammensetzung gemäß einem der vorhergehenden Ansprüche mit einer Viskosität unter den Bedingungen eines Laufens des Reifens bei abgelassener Luft im Bereich von 1 000 bis 3 000 Saybolt Universal-Sekunden, gemessen gemäß BS 188-1957 bei 98, 9°C.

9.) Zusammensetzung gemäß einem der vorhergehenden Ansprüche, worin das Polybuten ein Viskositäts-mittleres Molekulargewicht im Bereich von 900 bis 1 300 besitzt.

10.) Zusammensetzung gemäß einem der vorhergehenden Ansprüche, worin der Butylkautschuk ein Viskositäts-mittleres Molekulargewicht im Bereich von 500 000 bis 600 000 besitzt.

11.) Pneumatischer Reifen, der an der inneren Oberfläche zumindest seines Profilabschnitts einen Gelfilm einer Zusammensetzung gemäß einem der vorhergehenden Ansprüche aufweist.

12.) Pneumatischer Reifen nach Anspruch 11, worin die Dicke des Gelfilms im Bereich von 2 bis 3 mm liegt.

## Revendications

1. Composition destinée à être appliquée sur la surface intérieure d'un pneumtique de manière à obturer de façon étanche des performations dans le pneumatique, alors que ce dernier roule à plat, et incluant essentiellement du polybutène, du polypropylène et du caoutchouc butyle, le polybutène étant présent en une quantité prépondérante par rapport à la somme des quantités des autres ingrédients de la composition.

2. Composition selon la revendication 1, dans laquelle le polybutène est du polyisobutène, qui peut contenir un pourcentage d'unités butène-1.

3. Composition selon la revendication 1 ou 2, dans laquelle le polypropylène possède un indice de fusion situé dans la gamme comprise entre 4 et 20 à 230°C, sous une charge de 2,16 kg, et un point de ramollissement situé dans la gamme allant de 120°C à 150°C.

4. Composition selon l'une quelconque des revendications précédentes, dans laquelle le polybutène est présent en une quantité comprise entre 65 et 98 pour cent en poids, le polypropylène est présent en une quantité comprise entre 3 et 20 pour cent en poids et le caoutchouc butyle est présent en une quantité comprise entre 3 et 20 pour cent en poids.

5. Composition selon l'une quelconque des revendications précédentes, dans laquelle le polybutène est présent en une quantité comprise entre 85 et 90 pour cent en poids.

6. Composition selon l'une des revendications précédentes, dans laquelle le polypropylène est présent en une quantité comprise entre 3 et 10% en poids.

7. Composition selon l'une quelconque des revendications précédentes, dans laquelle le caoutchouc butyle est présent en une quantité comprise entre 3 et 10 pour cent en poids.

8. Composition selon l'une quelconque des revendications précédentes possédant dans les conditions de roulement à plat du pneumatique une viscosité, qui se situe dans la gamme comprise entre 1000 et 3000 secondes universelles de Saybolt, mesurée selon la norme BS 188–1957 à 98,9°C.

9. Composition selon l'une quelconque des revendications précédentes, dans laquelle le polybutène possède une viscosité correspondant à un poids moléculaire moyen situé dans la gamme entre 900 et 1300.

10. Composition selon l'une quelconque des revendications précédentes, dans laquelle le caoutchouc butyle possède une viscosité correspondant à un poids moléculaire moyen situé dans la gamme comprise entre 500 000 et 600 000.

11. Pneumatique possédant sur la surface intérieure au moins de parties formant bandes de roulement une pellicule formée d'un gel ayant une composition selon l'une quelconque des revendications précédentes.

12. Pneumatique selon la revendication 11, dans lequel la pellicule en forme de gel possède une épaisseur située dans la gamme comprise entre 2 et 3 mm.